# EUROPEAN PATENT APPLICATION

(11) **EP 4 807 929 A1**
(43) Date of publication of application: **16.09.2026**
(21) Application number: 25163344.2
(22) Date of filing: 12.03.2025
(51) Int. Cl.: H02J 1/08, H02J 4/00, H02J 9/06, G06F 1/26

(54) **AUTOMATION PLATFORM FOR PROVIDING A POWER SUPPLY AND/OR CONTROL SIGNALS**

(71) Applicant: Murrelektronik GmbH, 71570 Oppenweiler (DE)
(72) Inventor: HILTUNEN, Jani, 05400 Jokela (FI); SILTALA, Juuso, 15340 Lahti (FI); KIVISTÖ, Markku, 15200 Lathi (FI)
(74) Representative: Bösherz Goebel Patentanwälte

(57) **Abstract**

The invention relates to an automation platform (10) for providing a power supply and/or control signals for the decentralised automation of components (500), particularly in an industrial plant (5), comprising:
- a DC power connection (40) for the provision of a first DC power,
- a plurality of electrical module connectors (50) to integrate multiple function modules (210) into the automation platform (10) in a modular and detachable manner, each of the function modules (210) being configured to provide the power supply and/or the control signals for an operation of the industrial plant (5),
- a central intermediate DC-link (60) for distributing the first DC power at least to the function modules (210) via the electrical module connectors (50), the DC-link (60) therefore being connected to the DC power connection (40).

## Description

The present invention relates to an automation platform for providing a power supply and/or control signals for the decentralised automation of components. Furthermore, the invention relates to a system for this purpose.

### State of the art

It is known from the prior art that automation platforms are often used to control and supply power to distributed components in industrial automation settings. Various systems from the prior art, such as modular automation solutions, allow for limited adaptability in different environments. However, these existing systems frequently exhibit shortcomings in terms of scalability, flexibility, and efficiency, particularly in applications requiring high degrees of decentralisation.

Furthermore, conventional platforms may struggle to meet the demands of modern manufacturing environments, where modular, reconfigurable systems are essential for optimising production processes and reducing downtime. In these diverse production environments, a complex power conversion may also be required. In particular, the demands for a reliable power supply in accordance with different technical demands of the components of the plant further increase the effort and reduce the flexibility of such systems.

It is therefore an object of the present invention to at least partially overcome the disadvantages described above. In particular, it is an object of the present invention to provide an improved platform for the automation of industrial plants.

### Disclosure of the invention

According to aspects of the invention an automation platform with the features of claim 1 and a system with the features of claim 9 are provided. Further features and details of the invention are disclosed in the respective dependent claims, the description and the drawings. Features and details described in the context to the automation platform according to the invention also correspond to the system according to the invention, and vice versa in each case.

According to an aspect of the invention an automation platform is provided. The automation platform according to the invention may particularly be used for providing a power supply and/or control signals for the decentralised automation of components, preferably electrical components, particularly in an industrial plant. In this context, "decentralized" may refer to distributing power supply and/or control signals and/or an automation functionality across individual groups of components within the industrial plant, rather than relying on a central control cabinet or control hub. Additionally, further automation platforms may be provided in the plant to cover the decentralized distribution of power supply and/or control signals for further individual groups of the plant.

The automation platform according to the invention may comprise a DC power connection for the provision of a, particularly high-voltage, first DC power. DC power particularly refers to direct current power, and AC power to alternating current power.

Furthermore, the automation platform according to the invention may comprise a plurality of electrical module connectors to integrate multiple function modules into the automation platform, particularly in a modular and/or detachable manner. Each of the function modules may be configured to provide the power supply and/or the control signals for an operation of the industrial plant.

Each or at least one of the function modules may comprise a housing with fastening means to be detachably attached to module connectors. The module connectors may comprise standardized interfaces, such as M12 or RJ45, facilitating electrical and/or data communication between modules of the automation platform. Function modules may house internal components like PCBs (printed circuit boards) with microcontrollers and/or field bus drivers (e.g., Profibus, EtherCAT) and/or power supply units and/or DC-DC converters and/or sensors for monitoring operational parameters.

It is also possible that the automation platform according to the invention comprises a central intermediate DC-link for distributing the first DC power at least to the function modules, particularly via the electrical module connectors. The DC-link may therefore be connected to the DC power connection and/or the electrical module connectors. The DC-link may be configured as a board or cable or the like.

The DC-link may comprise a board and/or cable, and/or a similar structure connecting the DC power connection with the electrical module connectors. For example, the DC-link may comprise a printed circuit board integrated within a protective casing, directly connecting the DC power source to the electrical module connectors. The DC-link may be configured as a DC bus, i.e. a common pathway for the DC power distribution between multiple function modules. The electrical module connectors may be positioned at the functional module installation locations of the automation platform, particularly drawing power from the DC link bus. This configuration allows for parallel DC link connections, facilitating simultaneous power distribution to multiple functional modules.

Each of the function modules may comprise a DC-DC converter configured to step down the first (higher) DC power to at least one second, lower voltage DC power, particularly for powering at least one internal component of the respective function module, preferably for providing the control signals and/or for providing, based on the lower voltage DC power, the power supply to the components of the industrial plant. It is possible that the or a further lower voltage DC power is used for providing the power supply.

It is possible that the automation platform according to the invention offers a centralized and efficient power distribution system for industrial applications. The DC power connection, also referred to as high-voltage DC power connection, provides a robust source of energy, while the modular design allows for easy integration and customization of various function modules. The central intermediate DC-link efficiently distributes power to the modules via dedicated connectors. The distribution of high-voltage DC power by the DC link has the advantage that the common complex conversion of AC voltage in the function modules or in other components of the industrial plant can be avoided. This increases efficiency and reduces manufacturing costs.

Each function module may therefore comprise a DC-DC converter, enabling them to regulate the voltage to lower levels suitable for powering the internal components and/or supplying control signals to the components of the plants outside of the automation platform. This solution thereby promotes energy efficiency by minimizing power loss and enables scalable deployment in industrial settings.

It is possible that at least a first one of the DC-DC converters, particularly of a first one of the function modules, is configured to step down the first DC power to the second, lower voltage DC power in a first voltage range.

At least a second one of the DC-DC converters, particularly of a second one of the function modules, is configured to step down the first DC power to the lower voltage DC power in a second voltage range.

At least a third one of the DC-DC converters, particularly of a third one of the function modules, is configured to step down the first DC power to the lower voltage DC power in a third or the first or second voltage range.

At least a fourth one of the DC-DC converters, particularly of a fourth one of the function modules, is configured to step down the first DC power to the lower voltage DC power in a fourth or the first or second voltage range.

Particularly, an upper limit of the first voltage range lies below a lower limit of the second voltage range.

This can have the advantage that different function modules can operate with tailored voltage levels. It is further possible that at least one of the DC-DC converters is configured to output a specific voltage level for a particular function module, enabling precise control over individual components within the system.

Particularly, the first voltage range is in the range from 10 V to 30 V and/or the second voltage range is in the range from 35 V to 60 V and/or the voltage range of the first DC power is in the range from 100 V to 1500 V, preferably from 400 V to 1000 V, particularly preferably from 600 V to 900 V.

It is possible that different function modules within the automation platform have varying voltage requirements. The provision of individual DC-DC converters allows for flexibility by enabling to step down the primary high-voltage DC power (i.e. the first DC power) to different secondary voltage ranges suitable for specific modules. This customization ensures each module receives the precise voltage necessary for its operation, enhancing system efficiency and compatibility with diverse components.

The central intermediate DC-Link particularly acts as a DC distribution system within the plant. It may thereby function as a central hub for distributing DC power generated by the external grid and/or an AC-DC Converter. This DC interface enables efficient and device-agnostic energy supply.

Implementing a DC-Link reduces the need for conventional converters that would have to transform AC into DC, resulting in a significant reduction of conversion losses and associated energy waste. For example, the DC-Link can be built using an arrangement of cables and/or a board with electrical conductors and/or power switches and/or capacitors. These components allow for reliable and efficient distribution of DC power. By utilizing the DC Link, function modules can be directly connected to the DC network, allowing motors and other electrical components in the plant to be directly powered by this network. This minimizes energy loss through repeated conversions between AC and DC, thus increasing the overall energy efficiency of the entire system.

The DC link may be partly or fully provided in the automation platform and optionally may also be provided outside of the automation platform to distribute the DC power to other components of the plant. The central location of the DC Link within the plant allows for flexible adaptation to specific requirements, as additional function modules can be easily connected to the existing network.

The first DC power may be distributed by the DC link and may also be provided to at least one external output of the automation platform. The external output may distribute the first DC power e.g. to a frequency inverter and/or at least one another automation platform. Thereby, decentralization of the plant structure may be further promoted.

According to another advantage, the automation platform may comprise a modular system architecture that incorporates multiple interfaces and/or connection units, enabling the supply of not only electrical power but also additional media, such as compressed air, hydraulic fluids, and other fluids essential for pneumatic, hydraulic, and/or fluid-based systems. This configuration may facilitate the integration of diverse actuator types, thereby enhancing flexibility and applicability across varied industrial processes. The platform's versatility makes it suitable for various industrial plants, integrating electrical, mechanical, pneumatic, and hydraulic control within a single system.

The automation platform according to the invention may comprise at least one base plate equipped with electrical and/or mechanical and/or fluidic connections, allowing for versatile module installation and seamless media distribution. This base plate may provide a modular setup that permits quick replacement or addition of functional modules, such as power supply units, controllers, and actuator controls, without major alterations to the infrastructure. Moreover, at least one IP67-rated enclosure may be provided and offers reliability for field deployment, eliminating the need for control cabinets. Also, optional cooling systems, such as water cooling or internal heating, may be provided as part of the automation platform to maintain optimal performance under diverse conditions.

According to another aspect, the automation platform may integrate a communication interface that facilitates real-time data exchange between individual function modules and/or central control units and/or at least one further automation platform of the plant. This communication may be adaptable to various protocols, including fieldbus and Ethernet-based networks, supporting synchronized control and monitoring across distributed components. This connectivity enhances system performance and may also enable predictive maintenance.

Additionally, the automation platform may support a range of control signals, including analogue and digital inputs and/or outputs, for precise control of connected actuators, such as electrical components like motors and/or solenoid valves and/or cylinders and/or pressure regulators in pneumatic or hydraulic systems. Furthermore, sensors for monitoring parameters like pressure, temperature, and/or flow, but also electrical parameters of the power supply, provide critical feedback to ensure safe and efficient operation. Another variant of the platform includes advanced safety features, such as real-time diagnostic systems for fault detection, which enhance both equipment and personnel protection.

The automation platform according to the invention may support multiple interconnected platforms distributed throughout the plant, particularly facility. Each platform can be configured according to the automation platform according to the invention and/or operate autonomously or in communication with others, allowing decentralized control and monitoring of various plant areas or functions. This inter-platform communication may be facilitated via protocols like fieldbus, enabling synchronized operation, efficient resource allocation, and/or comprehensive data sharing across platforms. Consequently, the system can manage complex, multi-functional processes, with each platform optimized for specific tasks or locations, thereby enhancing the adaptability and efficiency of the entire automation solution.

The automation platform according to the invention may also provide an integrated energy storage system, thereby improving the ability to leverage regenerative energy sources and/or thereby achieving peak shaving for grid stabilization.

It is further possible that at least one energy-storing module is provided that comprises at least one energy storage unit, particularly comprising at least one capacitor and/or battery. The at least one energy-storing module may be connected to the DC-link, particularly via at least one of the module connectors. Also, the at least one energy-storing module may be configured to store excess energy generated within the automation platform and/or the industrial plant. This stored energy can then be utilized to power the automation platform and/or the industrial plant during periods of reduced energy generation or increased energy demand.

At least one energy-storing module may be further configured to release the stored energy back to the DC-link, particularly when demand exceeds a threshold value and/or exceeds the supply of the function modules and/or the industrial plant. It is therefore possible that the automation platform incorporates an energy storage module that could contain capacitors and/or batteries to store surplus energy produced within the platform or the industrial plant it serves. The stored energy can be released back into the DC-link when demand surpasses a predetermined threshold, exceeding the supply capacity of the function modules or the industrial plant itself. This feature enhances the system's efficiency by mitigating energy waste and providing a buffer during periods of high demand.

It is also possible that the automation platform comprises a modular design, allowing for a plurality of the energy-storing modules being interconnected and thereby enabling scalable energy storage capacity based on the needs of the function modules and/or the industrial plant. It is possible to configure the automation platform's scalability for example by interconnecting multiple energy-storing modules. This modularity allows for an adaptable energy storage capacity that can be adjusted according to the requirements. This flexibility enhances the system's ability to meet varying energy demands.

It is possible that the DC-link is electrically connected with and/or integrated into a further DC link of the industrial plant. The DC-link of the automation platform particularly provides the same voltage level as the further DC link. Thereby, the automation platform can seamlessly integrate with the existing power infrastructure of the industrial plant. This integration allows for efficient power distribution and reduces redundancy by utilizing a common voltage level across both systems. The shared DC link enhances system stability and simplifies maintenance procedures

It is further possible that an AC-DC power converter is connected to the DC-link via the DC power connection for converting an AC power into the first DC power. It is possible that the automation platform can be supplied with AC power from the mains, which is then converted into DC power by the AC-DC power converter of the automation platform. This DC power is may then be distributed to the function modules via the DC-link. This setup offers flexibility in terms of power source and allows for utilization of existing AC infrastructure. The AC-DC power converter may be configured as another module for the automation platform and therefore be integrated to the automation platform in a modular and detachable manner.

It is possible that the AC-DC power converter is part of a power supply unit, particularly module, of the automation platform. This can have the advantage of reducing overall system complexity and size. It is also possible that the AC-DC power converter integrates with other components within the automation platform, to optimize energy consumption.

The automation platform may further comprise a base module. The DC-link may be provided at least partially by the base module, for example by conductive traces. The DC-bus may be integrated into the base module, including conductive traces and/or connectors and/or conductive areas and/or ground areas, that can be part of the DC-bus.

The electrical module connectors may also be provided by the base module to detachably attach the function modules to the base module and to electrically connect the function modules to the DC-link.

In other words, it is possible that the automation platform incorporates a modular design, with a base module serving as a foundation. This base module may house essential components such as the DC-link, which distributes power to the function modules, and the electrical module connectors, enabling detachable attachment of the function modules. The integration of these elements into the base module streamlines the assembly process and facilitates system expansion or modification.

It is further possible that the automation platform and particularly the base module further comprises:
- a data bus for distributing data signals to and/or between the function modules, particularly in the form of a fieldbus and/or an EtherCAT bus, and/or
- an AC bus for distributing the AC power to the function modules.

It is therefore possible that the automation platform facilitates communication and data exchange between the function modules. This enhancement allows for coordinated control and operation of the components within the industrial plant. The integration of a fieldbus or EtherCAT bus enables efficient data transmission, while the AC bus provides power to the function modules, simplifying the overall system design.

Another aspect of the invention is a system for providing a power supply and/or control signals for components in an industrial plant.

The system may comprise an AC-DC power converter for converting an AC power into a first DC power.

Furthermore, the system may comprise a plurality of function modules for providing the power supply and/or the control signals for an operation of the industrial plant. Also, the system may comprise a central intermediate DC-link for distributing the first DC power at least to the function modules. Thus, the system according to the invention brings the same advantages as have been described in detail with reference to the automation platform according to the invention. It allows for a centralization of the AC-DC conversion to achieve higher efficiency and reduce overall system complexity.

The present invention therefore particularly relates to an improved modular system for industrial automation application. The automation platform and particularly system may provide a centralized AC-DC conversion and/or high-voltage DC bus distribution and/or integrated energy storage capability.

It is possible that each of at least two of the function modules comprises a DC-DC converter configured to step down the first DC power from the DC-link to at least one second, lower voltage DC power suitable for powering at least one internal component of the respective function module and/or of the components, particularly electrical components, of the industrial plant. This allows for customized power distribution within each function module. By having individual DC-DC converters, different modules can be supplied with specific voltage levels required by their respective internal components or for the components of the plants they serve. This level of granularity enhances efficiency and avoids energy loss due to unnecessary conversion steps. Furthermore, the use of dedicated DC-DC converters enables precise voltage regulation, ensuring optimal performance and reliability of the connected components within each function module

It is also possible that at least one energy-storing module is provided that comprises at least one energy storage unit. The energy-storing module may comprise the at least one energy storage unit in the form of at least one capacitor and/or battery. The use of capacitors and/or batteries as energy storage units enables efficient management of energy flow between the AC-DC power converter, the DC-link, and the external grid. This ensures stable operation of the industrial plant, even during fluctuations in grid supply or peak demand periods.

A control system may be provided to regulate an energy flow between the AC-DC power converter and/or the DC-link and/or the energy-storing module, particularly based on predefined parameters, to prioritize energy storage and reduce external grid reliance. This can have the advantage of increasing energy efficiency and reducing operational costs. It is also possible that this system can contribute to grid stability by providing ancillary services such as frequency regulation. Prioritizing energy storage through predefined parameters allows for efficient utilization of generated energy, minimizing waste and contributing to a more sustainable operation.

The energy-storing module may be configured to couple with at least one external grid through an inverter, particularly enabling the transfer of surplus energy generated within the system to the external grid, and particularly enabling the transfer of surplus energy generated within the system to the external grid in a grid-compliant manner.

The components of the industrial plant particularly comprise at least one motor that is configured to at least partially generate the surplus energy.

Therefore, the system may be able to enhances the sustainability and cost-efficiency of the industrial plant by utilizing renewable energy sources, reducing dependence on the grid, and optimizing energy consumption. The ability to store surplus energy generated within the system and feed it back into the grid, particularly in a grid-compliant manner, contributes to a more sustainable energy system.

It is possible that the AC-DC power converter is configured to convert the AC power, particularly with a 3-phase AC voltage, into the first DC power, particularly with a DC voltage in the range from 600 V to 1000 V, preferably 700 V to 900 V. The AC voltage may be in the range from 100 V to 600 V AC. This configuration enables reliable and consistent power distribution to the function modules and/or components of the plant. It is possible that the AC-DC power converter is designed for efficient conversion of typical industrial power sources. The specified DC voltage range may align with common requirements for high-power applications in industrial settings.

It is further possible that an analyser unit is provided that is configured to analyse the power supply and/or power received from the components of the industrial plant. This allows to evaluate a stability of the power supply and/or detecting instabilities and/or noise in the power supply. It is possible that the analyser unit can monitor the power flow within the industrial plant, identifying potential issues like voltage fluctuations or harmonic distortions. This proactive monitoring allows for early detection of instability, enabling preventative measures to be taken. The analyser unit's insights can also optimize power distribution and improve the overall efficiency of the industrial plant.

It is also possible that the AC-DC power converter is part of a power supply unit, particularly integrated into the automation platform. The analyser unit may also be part of the power supply unit. It is possible that integrating the AC-DC power converter and the analyser unit into a single power supply unit simplifies system design and reduces the overall footprint.

It is further possible that at least the plurality of function modules and the DC-link is part of a first automation platform, and at least two or at least three or at least four further automation platforms are provided. Each of the automation platforms may be configured according to an automation platform according to the invention. Furthermore, each of the automation platforms may be positioned in the field of the industrial plant. The platforms may be interconnected with each other for data exchange. Thereby it is possible to provide a decentralised automation of components in the industrial plant. This decentralized approach can enhance system flexibility and resilience by distributing control functions across multiple platforms. A failure mechanism may be provided as well: should one platform fail, others can continue operating, minimizing downtime and ensuring continued production.

Further advantages, features and details of the invention will be apparent from the following description, in which embodiments of the invention are described in detail with reference to the drawings. In this connection, the features mentioned in the claims and in the description may each be essential to the invention individually or in any combination. Showing:
- Fig. 1: a schematic view of a conventional automation platform.
- Fig. 2: a schematic view of an automation platform according to embodiments of the invention.
- Fig. 3: a schematic view of a system according to embodiments of the invention.

Common industrial automation systems often rely on individual modules with their own built-in AC-DC converters, leading to redundancy, increased component count, and potential inefficiencies in power distribution. Moreover, these systems typically lack integrated energy storage solutions, limiting the ability to leverage regenerative energy sources or achieve peak shaving for grid stabilization.

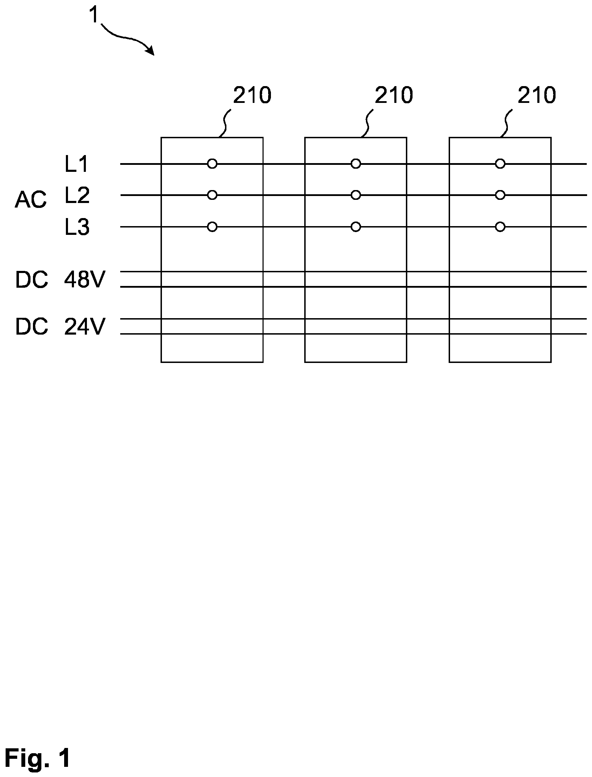

Fig. 1 shows a typical setup 1 of a conventional automation platform. In this case, a centralized AC power bus L1, L2, L3 is used to supply AC power to the functional modules 210. This requires a complex AC-DC conversion for each of the modules 210, as well as several DC-DC conversions if needed.

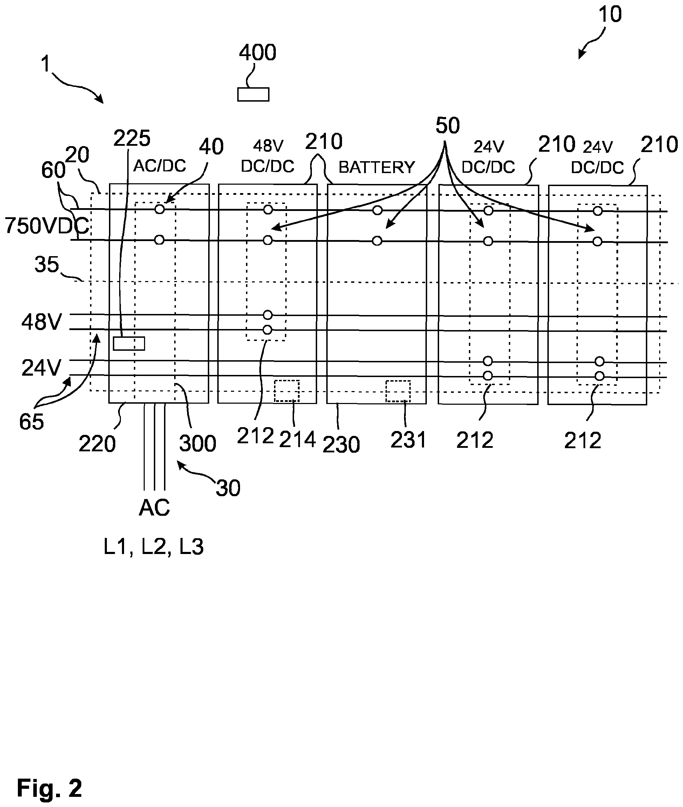

Fig. 2 shows an automation platform according to embodiments of the invention that address these limitations by introducing a modular power system 1 comprising at least one of the following:
- a centralized AC-DC converter unit generating high-voltage DC bus voltage (e.g., 750 V DC), particularly referred to as the first DC power,
- at least one standardized backplane with electrical module connectors 50 (particularly dedicated slots) for functional modules 210, particularly in the form of data and power modules,
- distributed DC-DC converters connecting the high-voltage DC bus to individual module requirements (e.g., 24 V DC or 48 V DC), and
- integrated energy storage modules utilizing capacitors or batteries.

A high-voltage DC bus can enable efficient power distribution with minimal voltage drop. The modular design of the automation platform allows flexible configuration and scalability. Integrated energy storage facilitates regenerative energy utilization, peak shaving, and grid stability.

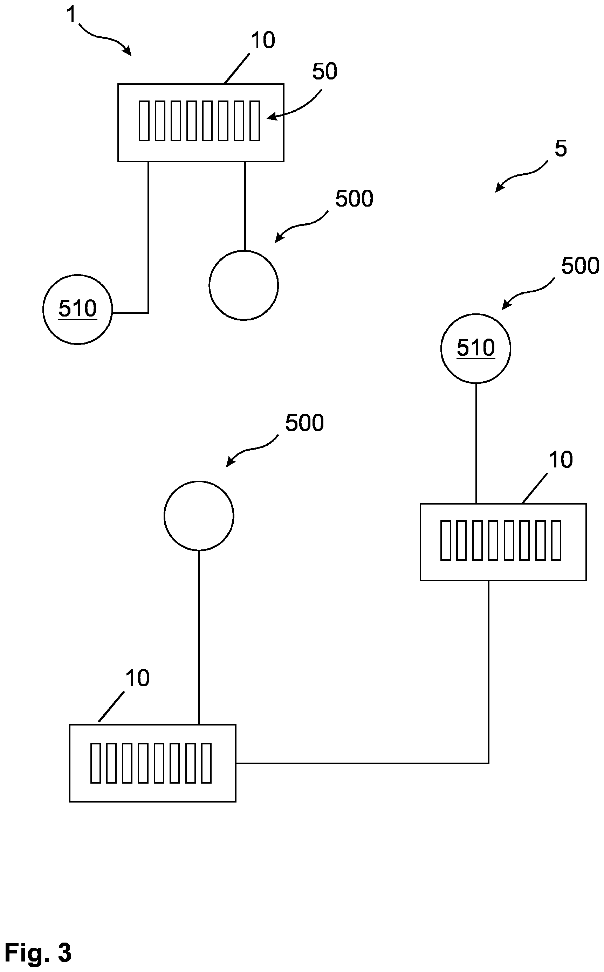

As shown in Fig. 3, multiple automation platforms 10 according to embodiments of the invention may be provided for a single industrial plant, thereby allowing for a decentralized automation of the components of the plant.

Embodiments of the invention provide AC-DC conversion by each of the automation platforms 10, minimizing redundancy and improving efficiency. Alternatively, an external DC bus may be connected to the automation platforms for providing the first DC power, thereby reducing the need for the AC-DC conversions by the automation platforms.

Fig. 2 shows embodiments of the invention that comprise an automation platform 10 for providing a power supply and/or control signals for the decentralised automation of components 500, particularly in an industrial plant 5 as shown in Fig. 3.

In this example, the automation platform 10 comprises a DC power connection 40 for the provision of a, particularly high-voltage, first DC power. The DC power connection 40 may be connected to an external DC bus (not shown) or as shown, to an internal AC-DC converter ("AC/DC") of the automation platform 10.

Furthermore, the automation platform 10 may comprise a plurality of electrical module connectors 50 to integrate multiple function modules 210 into the automation platform 10 in a modular and detachable manner. Each of the function modules 210 may be configured to provide the power supply and/or the control signals for an operation of the industrial plant 5.

Also, the automation platform 10 comprises a central intermediate DC-link 60, like a board or cable(s), for distributing the first DC power at least to the function modules 210 via the electrical module connectors 50. The DC-link 60 may therefore be connected to the DC power connection 40 and/or to the module connectors 50.

Each of the function modules 210 may comprise a DC-DC converter 212 ("DC/DC") configured to step down the first DC power to at least one second, lower voltage DC power for powering at least one internal component 214 of the respective function module 210 for providing the control signals and/or for providing the lower voltage DC power for the power supply to the components 500 of the industrial plant 5.

It is possible that at least a first one of the DC-DC converters 212, particularly of a first one of the function modules 210, is configured to step down the first DC power to the second, lower voltage DC power in a first voltage range (e.g. "24 V", as exemplarily shown for two function modules 210 in Fig. 2).

At least a second one of the DC-DC converters 212, particularly of a second one of the function modules 210, is configured to step down the first DC power to the lower voltage DC power in a second voltage range (e.g. "48 V", as exemplarily shown for one function module 210 in Fig. 2).

An upper limit of the first voltage range (e.g. 24 VDC) may lie below a lower limit of the second voltage range (e.g. 48 VDC).

Optionally, at least one lower voltage DC bus 65 of the automation platform 10 may be provided for a further distribution of the second DC power, i.e. the stepped down DC power.

It is further possible that at least one energy-storing module 230 is provided that comprises at least one energy storage unit 231, particularly at least one capacitor and/or battery ("BATTERY" in Fig. 2).

The at least one energy-storing module 230 may be connected to the DC-link 60, particularly via at least one of the module connectors 50, and the at least one energy-storing module 230 may be configured to store excess energy generated within the automation platform 10 and/or the industrial plant 5. The at least one energy-storing module 230 may be further configured to release the stored energy back to the DC-link 60, particularly when demand exceeds a threshold value and/or exceeds the supply of the function modules 210 and/or the industrial plant 5.

The automation platform 10 may comprise a modular design, allowing for a plurality of the energy-storing modules 230 being interconnected and thereby enabling scalable energy storage capacity based on the needs of the function modules 210 and/or the industrial plant 5.

Also, the DC-link 60 may be electrically connected with and/or integrated into a further DC link of the industrial plant 5. In the example shown in Fig. 2, however, the DC-link is connected to an AC-DC power converter 300 via the DC power connection 40 for converting an AC power ("AC", "L1, L2, L3", in Fig. 2) into the first DC power ("750VDC" in Fig. 2). The first DC power may be substantially 750 VDC but is not limited thereto. Also, the AC-DC power converter 300 may be part of a power supply unit 220 of the automation platform 10.

The automation platform 10 may further comprise a base module 20, wherein the DC-link 60 may be provided at least partially by the base module 20, and wherein the electrical module connectors 50 may be also provided by the base module 20 to detachably attach the function modules 210 to the base module 20 and to electrically connect the function modules 210 to the DC-link 60.

The automation platform 10 and particularly the base module 20 may further comprise a data bus 35 for distributing data signals to and/or between the function modules 210, particularly in the form of a fieldbus and/or an EtherCAT bus, and/or an AC bus 30 for distributing the AC power to the function modules 210.

Furthermore, as shown in Figs. 2 and 3, a system 1 according to embodiments of the invention is shown for providing a power supply and/or control signals for components 500 in an industrial plant 5.

At least one energy-storing module 230 may be provided that comprises at least one energy storage unit 231, particularly comprising at least one capacitor and/or battery.

Furthermore, a control system 400 may be provided to regulate an energy flow between the AC-DC power converter 300, the DC-link 60, and the energy-storing module 230, particularly based on predefined parameters, to prioritize energy storage and reduce external grid reliance. The energy-storing module 230 may be configured to couple with at least one external grid through an inverter, enabling the transfer of surplus energy generated within the system 1 to the external grid, particularly enabling the transfer of surplus energy generated within the system 1 to the external grid in a grid-compliant manner.

As shown in Fig. 3, the components 500 of the industrial plant 5 may comprise at least one motor 510 that is configured to at least partially generate the surplus energy.

Additionally, according to Fig. 1, an analyser unit 225 may be provided that is configured to analyse the power supply and/or power received from the components 500 of the industrial plant 5, thereby evaluating a stability of the power supply and/or detecting instabilities and/or noise in the power supply.

The foregoing explanation of the embodiments describes the present invention in the context of examples. Of course, individual features of the embodiments can be freely combined with each other, provided that this is technically reasonable, without leaving the scope of the present invention.

### Reference list

- 1: system
- 5: plant

- 10: automation platform

- 20: base module, back plane

- 30: AC bus
- 35: data bus

- 40: DC power connection

- 50: module connectors

- 60: DC bus, DC-link
- 65: lower voltage DC bus

- 210: function modules
- 212: DC-DC converter
- 214: internal component

- 220: power supply unit
- 225: analyser unit
- 230: energy-storing module
- 231: energy storage unit

- 300: AC-DC power converter

- 400: control system

- 500: components, electrical components
- 510: motor

## Claims

1. An automation platform (10) for providing a power supply and/or control signals for the decentralised automation of components (500), particularly in an industrial plant (5), comprising:
- a DC power connection (40) for the provision of a first DC power,
- a plurality of electrical module connectors (50) to integrate multiple function modules (210) into the automation platform (10) in a modular and detachable manner, each of the function modules (210) being configured to provide the power supply and/or the control signals for an operation of the industrial plant (5),
- a central intermediate DC-link (60) for distributing the first DC power at least to the function modules (210) via the electrical module connectors (50), the DC-link (60) therefore being connected to the DC power connection (40),
**characterized in that** each of the function modules (210) comprises a DC-DC converter (212) configured to step down the first DC power to at least one second, lower voltage DC power for powering at least one internal component (214) of the respective function module (210) for providing the control signals and/or for providing, based on the lower voltage DC power, the power supply to the components (500) of the industrial plant (5).

2. The automation platform (10) of claim 1,
**characterized in that** at least a first one of the DC-DC converters (212), particularly of a first one of the function modules (210), is configured to step down the first DC power to the second, lower voltage DC power in a first voltage range, and at least a second one of the DC-DC converters (212), particularly of a second one of the function modules (210), is configured to step down the first DC power to the lower voltage DC power in a second voltage range, wherein an upper limit of the first voltage range (24 VDC) lies below a lower limit of the second voltage range (48 VDC), and wherein particularly the first voltage range (24 VDC) is in the range from 10 V to 30 V and/or the second voltage range (48 VDC) is in the range from 35 V to 60 V and/or the voltage range of the first DC power (750 VDC) is in the range from 100 V to 1500 V, preferably from 400 V to 1000 V, particularly preferably from 600 V to 900 V.

3. The automation platform (10) of any one of the preceding claims,
**characterized in that** at least one energy-storing module (230) is provided that comprises at least one energy storage unit (231), particularly comprising at least one capacitor and/or battery, the at least one energy-storing module (230) being connected to the DC-link (60), particularly via at least one of the module connectors (50), and the at least one energy-storing module (230) being configured to store excess energy generated within the automation platform (10) and/or the industrial plant (5), and the at least one energy-storing module (230) being further configured to release the stored energy back to the DC-link (60), particularly when demand exceeds a threshold value and/or exceeds the supply of the function modules (210) and/or the industrial plant (5).

4. The automation platform (10) of claim 3,
**characterized in that** the automation platform (10) comprises a modular design, allowing for a plurality of the energy-storing modules (230) being interconnected and thereby enabling scalable energy storage capacity based on the needs of the function modules (210) and/or the industrial plant (5).

5. The automation platform (10) of any one of the preceding claims,
**characterized in that** the DC-link (60) is electrically connected with and/or integrated into a further DC link of the industrial plant (5), the DC-link (60) of the automation platform (10) particularly providing the same voltage level as the further DC link.

6. The automation platform (10) of any one of the preceding claims,
**characterized in that** an AC-DC power converter (300) is connected to the DC-link (60) via the DC power connection (40) for converting an AC power into the first DC power.

7. The automation platform (10) of claim 6,
**characterized in that** the AC-DC power converter (300) is part of a power supply unit (220) of the automation platform (10), and the automation platform (10) further comprises:
- a base module (20), the DC-link (60) being provided at least partially by the base module (20), and the electrical module connectors (50) being also provided by the base module (20) to detachably attach the function modules (210) to the base module (20) and to electrically connect the function modules (210) to the DC-link (60).

8. The automation platform (10) of claim 6 or 7,
**characterized in that** the automation platform (10) and particularly the base module (20) further comprises:
- a data bus (35) for distributing data signals to and/or between the function modules (210), particularly in the form of a fieldbus and/or an EtherCAT bus, and/or
- an AC bus (30) for distributing the AC power to the function modules (210).

9. A system (1) for providing a power supply and/or control signals for components (500) in an industrial plant (5), comprising:
- an AC-DC power converter (300) for converting an AC power into a first DC power,
- a plurality of function modules (210) for providing the power supply and/or the control signals for an operation of the industrial plant (5),
- a central intermediate DC-link (60) for distributing the first DC power at least to the function modules (210).

10. The system (1) of claim 9,
**characterized in that** each of at least two of the function modules (210) comprises:
- a DC-DC converter (212) configured to step down the first DC power from the DC-link (60) to at least one second, lower voltage DC power suitable for powering at least one internal component (214) of the respective function module (210) and/or of the components (500), particularly electrical components (500), of the industrial plant (5).

11. The system (1) of any one of claims 9 to 10,
**characterized in that** at least one energy-storing module (230) is provided that comprises at least one energy storage unit (231), particularly comprising at least one capacitor and/or battery, and
**characterized in that** a control system (400) is provided to regulate an energy flow between the AC-DC power converter (300), the DC-link (60), and the energy-storing module (230), particularly based on predefined parameters, to prioritize energy storage and reduce external grid reliance, the energy-storing module (230) particularly being configured to couple with at least one external grid through an inverter, enabling the transfer of surplus energy generated within the system (1) to the external grid, particularly enabling the transfer of surplus energy generated within the system (1) to the external grid in a grid-compliant manner, and the components (500) of the industrial plant (5) particularly comprising at least one motor (510) that is configured to at least partially generate the surplus energy.

12. The system (1) of any one of claims 9 to 11,
**characterized in that** the AC-DC power converter (300) is configured to convert the AC power, particularly with a 3-phase AC voltage, into the first DC power, particularly with a DC voltage in the range from 600 V to 1000 V, preferably 700 V to 900 V, the AC voltage particularly being in the range from 100 V to 600 V AC.

13. The system (1) of any one of claims 9 to 12,
**characterized in that** an analyser unit (225) is provided that is configured to analyse the power supply and/or power received from the components (500) of the industrial plant (5), thereby evaluating a stability of the power supply and/or detecting instabilities and/or noise in the power supply.

14. The system (1) of claim 13,
**characterized in that** the AC-DC power converter (300) is part of a power supply unit (220), and the analyser unit (225) being also part of the power supply unit (220).

15. The system (1) of any one of claims 9 to 14,
**characterized in that** at least the plurality of function modules (210) and the DC-link (60) is part of a first automation platform (10), and at least two or at least three or at least four further automation platforms (10) are provided,
each of the automation platforms (10) being configured according to any one of claims 1 to 8, and
each of the automation platforms (10) being positioned in the field of the industrial plant (5) and particularly being interconnected with each other for data exchange, thereby providing a decentralised automation of components (500) in the industrial plant (5).
